# EUROPÄISCHE PATENTSCHRIFT

(11) **EP 2 067 247 B1**
(45) Veröffentlichungstag und Bekanntmachung des Hinweises auf die Patenterteilung: **13.04.2016**
(21) Anmeldenummer: 07800185.6
(22) Anmeldetag: 17.09.2007
(51) Int. Cl.: H02M 7/493, G05B 19/042, H02J 3/38

(54) **DATENAUSTAUSCH ZWISCHEN WECHSELRICHTERN IN EINEM WECHSELRICHTERSYSTEM**
DATA INTERCHANGE BETWEEN INVERTERS IN AN INVERTER SYSTEM
ÉCHANGE DE DONNÉES ENTRE ONDULEURS DANS UN SYSTÈME D'ONDULEURS

(30) Priorität: 28.09.2006 AT 16162006
(43) Veröffentlichungstag der Anmeldung: 10.06.2009
(73) Patentinhaber: Fronius International GmbH, 4643 Pettenbach (AT)
(72) Erfinder: ANGERER, Christian, 4522 Sierning (AT); HEIGL, Hannes, 4731 Prambachkirchen (AT); KREUZER, Harald, 4616 Weißkirchen/Traun (AT)
(74) Vertreter: Sonn & Partner Patentanwälte
(86) Internationale Anmeldenummer: PCT/AT2007/000441
(87) Internationale Veröffentlichungsnummer: WO 2008/036990

(56) Entgegenhaltungen:
- EP-A- 1 503 262
- WO-A-2005/117136
- WO-A-2006/084294
- DE-A1- 10 153 846
- DE-A1-102004 015 227
- "IEC, International Electrotechnical Vocabulary Online" 2008, INTERNATIONAL ELECTROTECHNICAL COMISSION , XP002465239 Gefunden im Internet: URL:http://www.electropedia.org/> [gefunden am 2008-01-18] das ganze Dokument

## Beschreibung

Die Erfindung betrifft ein Wechselrichtersystem mit mehreren Wechselrichtern, welche jeweils zumindest eine Steuervorrichtung aufweisen, wobei zwischen den Wechselrichtern jeweils zumindest eine Leitung zum Austausch von Daten angeordnet ist.

Weiters betrifft die Erfindung einen Wechselrichter für ein oben genanntes Wechselrichtersystem mit zumindest einer Steuervorrichtung und Anschlüssen für Leitungen für die Verbindung mit anderen Wechselrichtern zum Austausch von Daten.

Ebenso betrifft die Erfindung ein Verfahren zum Betreiben mehrerer Wechselrichter mit jeweils einer Steuervorrichtung eines Wechselrichtersystems, wobei zwischen den Wechselrichtern Daten über zumindest eine Leitung ausgetauscht werden.

Die EP 1 503 262 A beschreibt ein System mit mehreren über Datenleitungen miteinander verbundenen Einheiten, wobei eine Einheit fix als Master definiert ist und an die Slave-Einheiten Daten senden kann. Die Slave-Einheiten weisen jeweils eine Umschaltvorrichtung auf welche über Adressen die über die Bus-Leitung an die Slaves geschickt werden, gesteuert werden können. Zusätzlich dient eine Taktleitung zur Übertragung eines im Master erzeugten Taktsignals an die Slave-Einheiten.

Die Aufgabe der Erfindung besteht in der Schaffung eines oben genannten Wechselrichtersystems bzw. eines Wechselrichters dafür und eines Verfahrens zum Betreiben mehrerer Wechselrichter eines Wechselrichtersystems, durch die einerseits eine hohe Übertragungssicherheit und andererseits eine hohe Datenübertragungsgeschwindigkeit gewährleistet werden kann.

Die Aufgabe der Erfindung wird durch ein oben genanntes Wechselrichtersystem gelöst, bei dem die Datenleitungen zwischen den Wechselrichtern durch Lichtwellenleiter realisiert sind, weiters jeder Wechselrichter eine mit der Steuervorrichtung des Wechselrichters und den Datenleitungen zweier benachbarter Wechselrichter verbundene Kommunikationsvorrichtung mit einer Umschaltvorrichtung, einer Sendevorrichtung und einer Empfangsvorrichtung aufweist, wobei die Sendevorrichtung über eine Sendeleitung und die Empfangsvorrichtung über eine Empfangsleitung mit der Umschaltvorrichtung verbunden sind, und die Sendevorrichtung eines Wechselrichters mit der Empfangsvorrichtung des nachfolgenden Wechselrichters und die Empfangsvorrichtung des Wechselrichters mit der Sendevorrichtung des vorhergehenden Wechselrichters verbunden ist, wobei die Umschaltvorrichtung jedes Wechselrichters zum Umschalten der Datenleitungen durch ein von einem als Master definierten Wechselrichter ausgehendes schrittweise unidirektional von einem Wechselrichter zum nachfolgenden Wechselrichter übertragbares Umschalt-Datenpaket zwischen einem während eines Startvorgangs des Wechselrichtersystems verwendeten Ring-System, bei dem alle Wechselrichter über die Datenleitungen in einem Ring zusammengeschaltet sind und die Daten vor der Weiterleitung zum nachfolgenden Wechselrichter von der Steuervorrichtung jedes Wechselrichters ausgewertet werden, und einem logisch auf dem Ring-System basierenden Bus-System, nach Abschluss des Startvorgangs während eines laufenden Betriebs des Wechselrichtersystems, bei dem alle Wechselrichter mit einem durch die Datenleitungen gebildeten gemeinsamen Bus verbunden sind, und die Daten im Wesentlichen gleichzeitig und unmittelbar an alle Wechselrichter gesendet und danach die Daten von den Steuervorrichtungen aller Wechselrichter ausgewertet werden, ausgebildet ist, wobei mit dem Umschalt-Datenpaket jedem Wechselrichter ein Zeitfenster zum Senden von Daten auf die Datenleitung zuweisbar ist, und zum Senden im Zeitfenster die Empfangsleitung von der Sendeleitung getrennt ist. Durch die Realisierung der Datenleitungen zwischen den Wechselrichtern durch Lichtwellenleiter ist eine automatische galvanische Trennung zwischen den Wechselrichtern gegeben, ohne dass eine zusätzliche Beschaltung erforderlich ist. Vorteilhaft ist hierbei, dass mit einer physikalischen Verbindung zwei konträre Bus-Systeme realisiert werden können. Demnach sind auch die Vorteile der unterschiedlichen Bus-Systeme gezielt einsetzbar. Das heißt, dass beim Startvorgang die Übertragungssicherheit des Ring-Systems und im laufenden Betrieb die hohe Übertragungsgeschwindigkeit des Bus-Systems ausgenutzt werden kann. Unter dem logisch auf dem Ring-System basierenden Bus-System wird ein Verbindungssystem verstanden, das zwar mit einem echten Bus-System insofern nicht gleichgesetzt werden kann, da ein bidirektionaler Datenaustausch nicht erfolgt, sondern üblicherweise ein unidirektionaler Datenverkehr von einem Wechselrichter zum anderen über die zu einem Bus-System zusammengeschalteten Datenleitungen.

Durch die Maßnahme gemäß den Ansprüchen 2 und 3 ist vorteilhaft, dass die empfangenen Daten auch immer die Steuervorrichtung jedes Wechselrichters enthält, unabhängig davon, ob eine Auswertung oder Bearbeitung erforderlich ist. Somit werden die Daten gegebenenfalls ohne Zeitverzögerung weitergeleitet, wobei diese gleichzeitig auch der Steuervorrichtung zur Verfügung gestellt werden.

Durch die Maßnahmen nach dem Anspruch 4 wird verhindert, dass empfangene Daten auf die Sendeleitung der Steuervorrichtung bzw. von der Steuervorrichtung gesendete Daten auf die Empfangsleitung der Empfangsvorrichtung geleitet werden.

Gelöst wird die erfindungsgemäße Aufgabe auch durch einen oben genannten Wechselrichter für ein oben genanntes Wechselrichtersystem, bei dem eine mit der Steuervorrichtung und den Anschlüssen für die durch Lichtwellenleiter realisierte Datenleitungen verbundene Kommunikationsvorrichtung mit einer Umschaltvorrichtung, einer Sendevorrichtung und einer Empfangsvorrichtung vorgesehen ist, wobei die Sendevorrichtung über eine Sendeleitung und die Empfangsvorrichtung über eine Empfangsleitung mit der Umschaltvorrichtung verbunden sind, und die Sendevorrichtung mit der Empfangsvorrichtung eines nachfolgenden Wechselrichters und die Empfangsvorrichtung mit der Sendevorrichtung eines vorhergehenden Wechselrichters verbindbar ist, wobei die Umschaltvorrichtung zum Umschalten der Datenleitungen durch ein von einem als Master definierten Wechselrichter ausgehendes schrittweise unidirektional zum nachfolgenden Wechselrichter übertragbares Umschalt-Datenpaket zwischen einem während eines Startvorgangs des Wechselrichtersystems verwendeten Ring-System, bei dem alle Wechselrichter über die Datenleitungen in einem Ring zusammengeschaltet sind und die Daten vor der Weiterleitung zum nachfolgenden Wechselrichter von der Steuervorrichtung jedes Wechselrichters ausgewertet werden, und einem logisch auf dem Ring-System basierenden Bus-System nach Abschluss des Startvorgangs während eines laufenden Betriebs des Wechselrichtersystems, bei dem alle Wechselrichter mit einem durch die Datenleitungen gebildeten gemeinsamen Bus verbunden sind und die Daten im Wesentlichen gleichzeitig und unmittelbar an alle Wechselrichter gesendet und danach die Daten von den Steuervorrichtungen aller Wechselrichter ausgewertet werden, ausgebildet ist, wobei mit dem Umschalt-Datenpaket dem Wechselrichter ein Zeitfenster zum Senden von Daten auf die Datenleitung zuweisbar ist, und zum Senden im Zeitfenster die Empfangsleitung von der Sendeleitung getrennt ist. Die Vorteile dieses und der davon abhängigen Ansprüche 6 bis 8 sind der obigen Beschreibung des Wechselrichtersystems zu entnehmen.

Die Aufgabe der Erfindung wird auch durch ein oben genanntes Verfahren zum Betreiben mehrerer Wechselrichter eines Wechselrichtersystems gelöst, wobei die durch die Lichtwellenleiter realisierte Datenleitungen mit jeweils einer Sendevorrichtung und jeweils einer Empfangsvorrichtung einer Kommunikationsvorrichtung jedes Wechselrichters verbunden werden, dass die Sendevorrichtung eines Wechselrichters mit der Empfangsvorrichtung des nachfolgenden Wechselrichters und die Empfangsvorrichtung des Wechselrichters mit der Sendevorrichtung des vorhergehenden Wechselrichters verbunden wird, dass die Sendevorrichtung jedes Wechselrichters über eine Sendeleitung und die Empfangsvorrichtung jedes Wechselrichters über eine Empfangsleitung mit einer Umschaltvorrichtung verbunden werden, während eines Startvorgangs des Wechselrichtersystems die Wechselrichter über die Umschaltvorrichtung zu einem physikalischen und logischen Ring-System verbunden werden, bei dem alle Wechselrichter über die Datenleitungen in einem Ring zusammengeschaltet sind und die Daten vor der Weiterleitung zum nächsten Wechselrichter von der Steuervorrichtung jedes Wechselrichters ausgewertet werden, und dass nach dem Startvorgang während eines laufenden Betriebs die Verbindung der Wechselrichter durch ein von einem als Master definierten Wechselrichter ausgehendes schrittweise unidirektional von eienm Wechselrichter zum nachfolgenden Wechselrichter übertragbares Umschalt-Datenpaket auf ein logisch auf dem Ring-System basierendes Bus-System, bei dem alle Wechselrichter mit einem durch die Datenleitungen gebildeten gemeinsamen Bus verbunden sind und die Daten im Wesentlichen gleichzeitig und unmittelbar an alle Wechselrichter gesendet und danach die Daten von den Steuervorrichtungen aller Wechselrichter ausgewertet werden, umgeschaltet wird, wobei mit dem Umschalt-Datenpaket jedem Wechselrichter ein Zeitfenster zum Senden von Daten auf die Datenleitung zugewiesen wird, und zum Senden im Zeitfenster die Empfangsleitung von der Sendeleitung getrennt wird. Vorteilhaft ist hierbei, dass der Aufbau des Wechselrichtersystems automatisch getestet wird. Ebenso können die einzelnen Wechselrichter aufgrund der physikalischen Position im Ring-System eindeutig identifiziert werden, ohne dass beispielsweise eine vordefinierte Nummerierung erforderlich ist.

Durch die Maßnahmen nach dem Anspruch 10 wird eine automatische Initialisierung aller im System befindlichen Wechselrichter bei sehr hoher Übertragungssicherheit erreicht.

Von Vorteil ist auch nach den Ansprüchen 11 und 12, dass erkannt wird, dass alle Wechselrichter betriebsbereit sind, wodurch ein sicheres Hochfahren gewährleistet ist. Ebenso werden dadurch Neukonfigurationen von Wechselrichtern, neue Wechselrichter, usw. sofort erkannt.

Durch die Maßnahme nach Anspruch 13 wird in vorteilhafter Weise erreicht, dass das Wechselrichtersystem völlig automatisch konfiguriert wird, wobei dies im Wesentlichen unabhängig von den physikalischen Anschlüssen erfolgt.

Weitere Vorteile können der nachfolgenden Beschreibung entnommen werden.

Die vorliegende Erfindung wird anhand der beigefügten, schematischen Zeichnungen näher erläutert. Darin zeigen:
- Fig. 1: eine schematische Übersichtsdarstellung eines mehrere Wechselrichter umfassenden Wechselrichtersystems;
- Fig. 2: die Kommunikationsvorrichtung mit der erfindungsgemäßen Umschaltvorrichtung eines Wechselrichters in einer ersten Schalterstellung; und
- Fig. 3: die Kommunikationsvorrichtung gemäß Fig. 2 in der zweiten Schalterstellung.

Einführend wird festgehalten, dass gleiche Teile des Ausführungsbeispiels mit gleichen Bezugszeichen versehen werden.

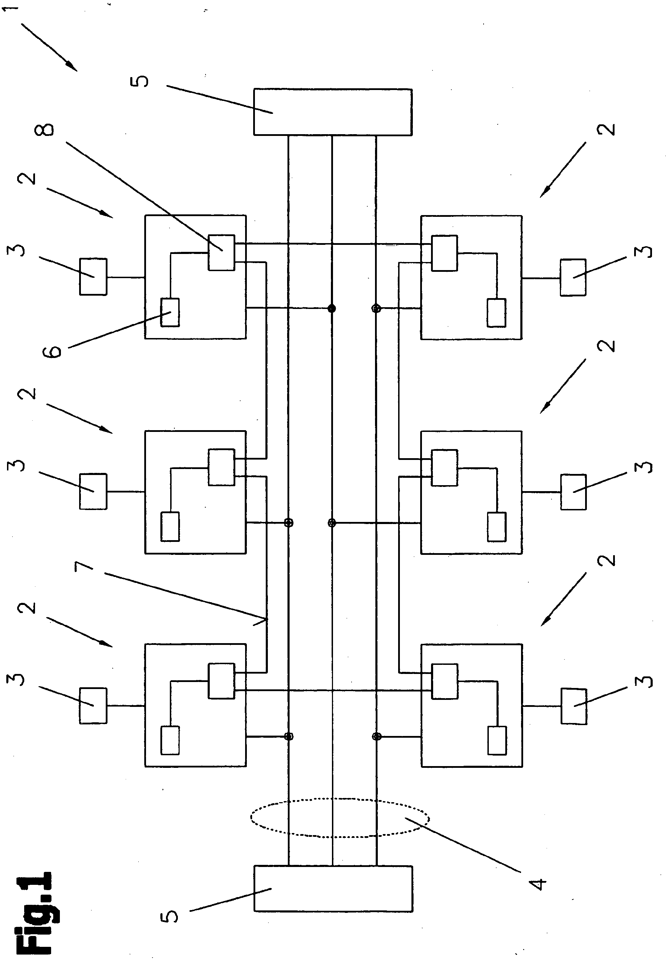

In Fig.1 ist ein üblicher Aufbau eines Wechselrichtersystems 1 mit mehreren - hier sechs - am Ausgang parallel geschalteten Wechselrichtern 2 dargestellt. Da die einzelnen Komponenten bzw. Baugruppen und Funktionen von Wechselrichtern 2 bereits aus dem Stand der Technik bekannt sind, wird auf diese nachstehend nicht im Detail eingegangen.

Die Wechselrichter 2 weisen beispielsweise einen DC-DC-Wandler, einen Zwischenkreis und einen DC-AC-Wandler auf (nicht dargestellt). An einem Eingang des DC-DC-Wandlers ist eine Energiequelle 3 bzw. ein Energieerzeuger angeschlossen, die bzw. der beispielsweise aus einem oder mehreren parallel und/oder seriell zueinander geschalteten Solarmodulen oder einer Batterie gebildet werden kann. Der Ausgang jeder Wechselrichter 2 ist über ein Wechselspannungsnetz oder ein Mehr-Phasennetz 4, beispielsweise ein 3-Phasennetz, mit einem oder mehreren elektrischen Verbrauchern 5 verbunden. Beispielsweise wird der Verbraucher 5 durch einen Motor, einen Kühlschrank, ein Funkgerät usw. gebildet.

Bevorzugt wird das Wechselrichtersystem 1 als Inselwechselrichtersystem zur Versorgung von vom öffentlichen Energieversorgungsnetz entkoppelten Verbrauchern 5 verwendet. Einerseits kann durch die Verwendung mehrerer Wechselrichter 2 mehr Leistung zum Betrieb der Verbraucher 5 bereitgestellt werden, andererseits kann aufgrund des redundanten Aufbaus die Ausfallswahrscheinlichkeit des Wechselrichtersystems 1 verringert werden, wodurch kritische Verbraucher 5 ausfallsicher mit Energie versorgt werden können.

Des.Weiteren weist ein Wechselrichter 2 eine Steuervorrichtung 6, die beispielsweise durch einen Mikroprozessor, einen Mikrocontroller oder einen Rechner gebildet sein kann, auf, über die eine entsprechende Steuerung der einzelnen Baugruppen, insbesondere der darin angeordneten Schaltelemente, vorgenommen werden kann. In der Steuervorrichtung 6 sind hierzu die einzelnen Regel- bzw. Steuerabläufe durch entsprechende Software-Programme und/oder Daten bzw. Kennlinien gespeichert.

Der in Fig. 1 gezeigte Aufbau mit den parallel geschalteten Wechselrichtern 2 dient bevorzugt dazu, eine definierte Aufteilung der durch den bzw. die Verbraucher 5 benötigten Leistung auf die einzelnen Wechselrichter 2 zu gewährleisten. Hierbei ist es möglich, dass die Wechselrichter 2 baugleich ausgebildet sind, sodass eine symmetrische bzw. gleichmäßige Lastaufteilung zwischen den Wechselrichtern 2 erfolgen kann. Des Weiteren können auch Wechselrichter 2 unterschiedlichen Typs, beispielsweise unterschiedlicher Leistungsklasse bzw. Nennleistung im Parallelbetrieb verwendet werden, wobei in diesem Fall eine entsprechende anteilsmäßige, insbesondere von der Nennleistung abhängige Lastaufteilung auf die Wechselrichter 2 vorgenommen wird. Wird beispielsweise bei einem Wechselrichtersystem 1 mit zwei Wechselrichtern 2 der zweite Wechselrichter 2 mit doppelter Nennleistung gegenüber dem ersten Wechselrichter 2 ausgeführt, wird das Wechselrichtersystem 1 derartig geregelt, dass der zweite Wechselrichter 2 auch die doppelte Leistung an den bzw. die Verbraucher 5 liefert.

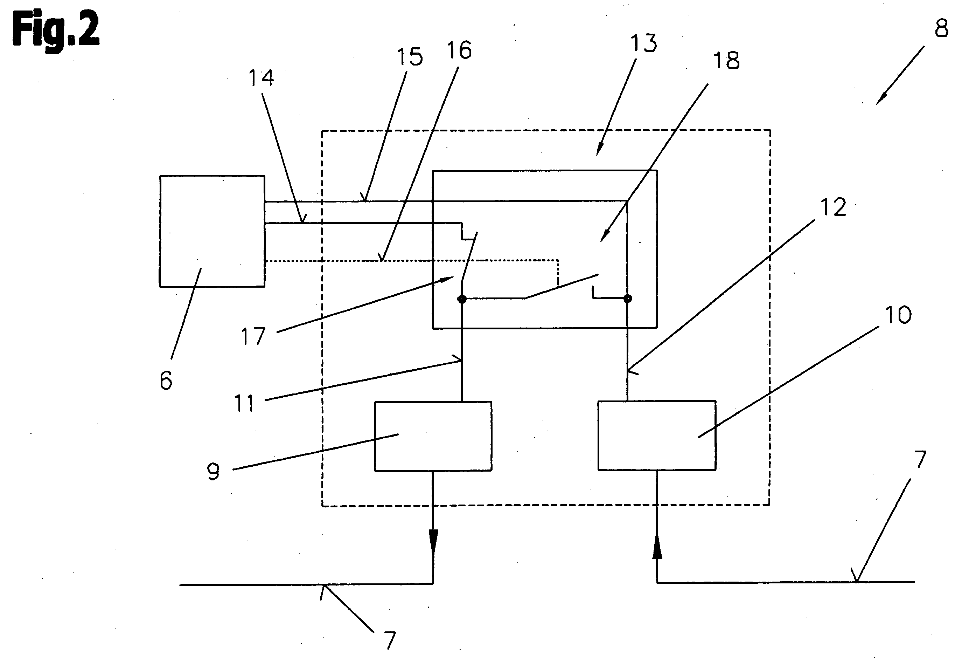

Damit ein sicherer Betrieb der parallel geschalteten Wechselrichter 2 des Wechselrichtersystems 1 gewährleistet ist, sind diese über jeweils zumindest eine Datenleitung 7, beispielsweise einen Lichtwellenleiter, zum Signal- bzw. Datenaustausch miteinander verbunden. Dazu weisen die Wechselrichter 2 Kommunikationsvorrichtungen 8 auf, die entsprechend Fig. 2 eine Sendevorrichtung 9 und eine Empfangsvorrichtung 10 umfassen, welche über eine Sendeleitung 11 und eine Empfangsleitung 12 mit der Steuervorrichtung 6 verbunden sind. Insbesondere werden die Wechselrichter 2 über diese Datenleitung 7 im laufenden Betrieb derart synchronisiert, dass die sinusförmigen Wechselspannungen an den Ausgängen der Wechselrichter 2 in gemeinsamer Phase sind, das heißt, gleiche Nulldurchgänge aufweisen. Demnach ist hierfür eine entsprechend schnelle Kommunikation über die Datenleitung 7 erforderlich.

Erfindungsgemäß ist nun vorgesehen, dass die Datenleitungen 7 auch zum sicheren Hochfahren des Wechselrichtersystems 1 eingesetzt werden, wobei hierzu völlig konträre Anforderungen an die Art der Datenübertragung als zur Synchronisation erforderlich sind. Demnach muss dazu eine hohe Übertragungssicherheit zum Erkennen aller Wechselrichter 2 im Wechselrichtersystem 1 sichergestellt werden.

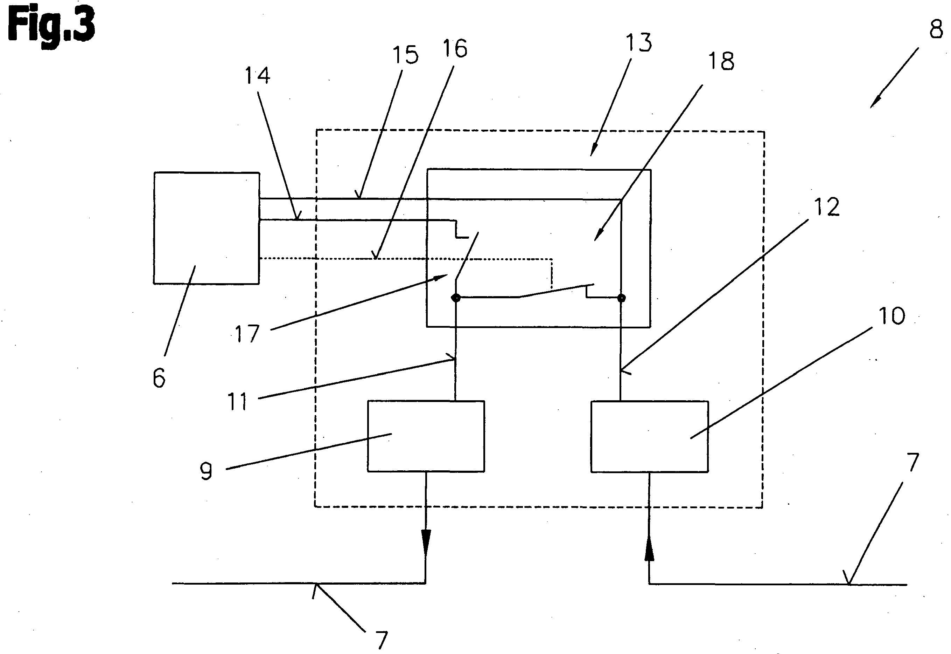

Damit dies über die eine zwischen den Wechselrichtern 2, beispielsweise Inselwechselrichter mit HF-Transformatoren, angeordnete Datenleitung 7 realisiert werden kann, ist in der Kommunikationsvorrichtung 8 des Wechselrichters 2 eine Umschaltvorrichtung 13 integriert. Diese Umschaltvorrichtung 13 und das entsprechende Verfahren zum Umschalten zwischen einem Ring-System und einem Bus-System wird in weiterer Folge in Zusammenschau von Fig. 1, Fig. 2 und Fig. 3 näher beschrieben.

Die erfindungsgemäße Umschaltvorrichtung 13 ist demnach derart in die Kommunikationsvorrichtung 8 integriert, dass die Sendeleitung 11 und die Empfangsleitung 12 zur Steuervorrichtung 6 unterbrochen bzw. entsprechend geschaltet werden können. Dazu ist die Umschaltvorrichtung 13 bevorzugt durch einen CMOS-Logikbaustein, ein Relais, ein EPLD (Erasable Programmable Logic Device), einfache Analogschalter oder dgl. gebildet.

Wie aus Fig. 1 zu erkennen ist, ist die Datenleitung 7 zwischen den Wechselrichtern 2 physikalisch als ein Ring-System bzw. eine Ring-Topologie realisiert. Das heißt, dass jeder Wechselrichter 2 mit zwei benachbarten Wechselrichtern 2 verbunden ist. Die Daten bzw. die Datenpakete werden hierbei schrittweise von einem Wechselrichter 2 zum nächsten übertragen, wobei jeder Wechselrichter 2 die Daten auswerten muss, bevor er diese weiterleiten kann.

Dazu ist die Umschaltvorrichtung 13 derart geschaltet, dass die Sendeleitung 11 der Sendevorrichtung 9 mit einer Sendeleitung 14 der Steuervorrichtung 6 verbunden ist, und die Empfangsleitung 12 der Empfangsvorrichtung 10 mit der Empfangsleitung 15 der Steuervorrichtung 6 verbunden ist. Das heißt, dass ein von der Steuervorrichtung 6 über eine Steuerleitung 16 angesteuerter Schalter 17, welcher die Sendeleitung 11 mit der Sendeleitung 14 verbindet, geschlossen ist. Ebenso wird mit der Steuerleitung 16 ein weiterer Schalter 18, welcher die Empfangsleitung 12 mit der Sendeleitung 11 verbindet, angesteuert, der sich invertierend zum Schalter 17 verhält, also in diesem Fall geöffnet ist. Bei einer derartigen Stellung der Schalter 17 und 18 der Umschaltvorrichtung 13 nutzt der Wechselrichter 2 das Ring-System für die Kommunikation. Selbstverständlich ist es auch möglich, dass der Schalter 17 und der Schalter 18 lediglich durch einen Schalter, beispielsweise dem Schalter 17, gebildet ist. Hierbei dient der Schalter 17 als Umschalter, welcher einfach die Sendeleitung 11 entweder mit der Sendeleitung 14 oder mit der Empfangsleitung 12 verbindet. Da das Ring-System eine hohe Übertragungssicherheit der Daten gewährleistet, ist somit sichergestellt, dass alle Wechselrichter 2 beim Hochfahren des Wechselrichtersystems 1 erkannt werden.

Das Hochfahren des Wechselrichtersystems 1 bzw. der Startvorgang erfolgt nun derart, dass ein beispielsweise bei der ersten Inbetriebnahme des Wechselrichtersystems 1 als Master definierter Wechselrichter 2 als erster ein Reset-Datenpaket sendet. Dieses bewirkt, dass alle Wechselrichter 2 auf die zum Hochfahren erforderliche Ring-Topologie umgeschaltet werden, falls sich diese nicht bereits in der Ring-Topologie befinden sollten. Selbstverständlich kann der Master im Wechselrichtersystem 1 auch automatisch bestimmt werden. Beispielsweise kann jener Wechselrichter 2 als Master bestimmt werden, der als erster ein Datenpaket sendet.

Nach dem Senden des Reset-Datenpakets sendet der Master ein weiteres Datenpaket, beispielsweise ein sog. Bus-Init-Paket. Gemäß der Ring-Topologie wird das Bus-Init-Paket über die Empfangsvorrichtung 10, Empfangsleitung 12, Umschaltvorrichtung 13 und der Empfangsleitung 15 an die Steuervorrichtung 6 des Wechselrichter 2 geleitet und ausgewertet. Bevor das Bus-Init-Paket nun über die Sendeleitung 14, die Umschaltvorrichtung 13, die Sendeleitung 11 und die Sendevorrichtung 9 über die Datenleitung 7 an den nächsten Wechselrichter 2 gesendet wird, wird von der Steuervorrichtung 6 eine sog. Wechselrichter-ID bzw. ein Initialisierungspaket an das Bus-Init-Paket des Masters angehängt. Somit empfängt der nächste Wechselrichter 2 das mit einer Wechselrichter-ID ergänzte Bus-Init-Paket und ergänzt es ebenso mit seiner Wechselrichter-ID. Dies wiederholt sich solange, bis der Master das von ihm ausgesendete Bus-Init-Paket, entsprechend mit den angehängten Wechselrichter-ID's, empfängt. Aufgrund der Anzahl der angehängten Wechselrichter-ID's weiß der Master, wie viele Wechselrichter 2 sich im Wechselrichtersystem 1 befinden. Ebenso ist mit dem Empfang des Bus-Init-Paketes gewährleistet, dass auch alle Wechselrichter 2 betriebsbereit sind und der Master über die Konfiguration der einzelnen Wechselrichter 2 informiert ist. Derartige Informationen sind bevorzugt in der Wechselrichter-ID enthalten, welche beispielsweise durch die Seriennummer, die Seriennummer in Kombination mit der Softwarenummer, usw. des Wechselrichters 2 gebildet wird. Durch die Wechselrichter-ID ist auch gewährleistet, dass jeder Wechselrichter 2 im Wechselrichtersystem 1 eindeutig ansprechbar ist, wobei dies ohne vordefinierte Adressierung durchgeführt werden kann. Beispielsweise kann ein Wechselrichter 2 auch über die physikalische Position im Wechselrichtersystem 1 eindeutig angesprochen werden.

Durch eine derartige Initialisierung der Wechselrichter 2 im Wechselrichtersystem 1 ist eine sichere Kommunikation, insbesondere für die im laufenden Betrieb erforderliche Synchronisation der Wechselrichter 2, gewährleistet, da die Datenpakete durch eine entsprechende Adressierung eindeutig dem entsprechenden Wechselrichter 2 zugeordnet werden können. Im Ring-System wird dabei das Datenpaket einfach solange an den nächsten Wechselrichter 2 weitergeleitet, bis es beim entsprechenden Wechselrichter 2 angelangt ist. Somit ist die Initialisierung abgeschlossen und das sicher hochgefahrene Wechselrichtersystem 1 kann in den laufenden Betrieb übergehen.

Erfindungsgemäß erfolgt jedoch die Kommunikation im laufenden Betrieb des Wechselrichtersystems 1 über die Bus-Topologie, wodurch eine wesentlich schnellere Übertragungsgeschwindigkeit, insbesondere für die Synchronisation gegeben ist. Bevorzugt erfolgt die Datenübertragung in der Bus-Topologie seriell und asynchron. Das heißt, dass die Bits, aus welchen sich ein Datenpaket zusammensetzt, nacheinander übertragen werden, wobei vor den beispielsweise acht Datenbits ein Startbit und nach den Datenbits ein Stopbit gesendet wird. Da die Datenübertragung in der Steuervorrichtung 6 meist parallel erfolgt, ist eine Seriell-Parallel-Wandlung erforderlich. Dies erfolgt beispielsweise über einen UART (Universal Asynchronous Receiver Transmitter), an dem demnach die Sendeleitung 14 und die Empfangsleitung 15 angeschlossen sind.

Die Umschaltung vom Ring-System auf das logisch auf dem Ring-System basierenden Bus-System, also nach Abschluss des Startvorgangs, erfolgt nun bevorzugt in folgender Weise:
Der Master sendet ein Umschalt-Datenpaket an den nächsten Wechselrichter 2 aus, das von der Steuervorrichtung 6 entsprechend ausgewertet wird. Das Resultat der Auswertung bewirkt nun, dass das vom Master empfangene Datenpaket zuerst über die Sendeleitungen 14, die Umschaltvorrichtung 13 und die Sendeleitung 11 an den nächsten Wechselrichter 2 übertragen wird, wobei anschließend die Steuervorrichtung 6 über die Steuerleitung 16 eine Umschaltung der Schalter 17, 18 bewirkt. Die Verbindung zwischen der Sendeleitung 14 und der Sendeleitung 11 wird also durch den Schalter 17 unterbrochen und die Verbindung zwischen der Empfangsleitung 12 und der Sendeleitung 11 über den Schalter 18 hergestellt. Auf diese Weise wird jeder Wechselrichter 2 im Wechselrichtersystem 1 schrittweise auf die Bus-Topologie umgeschaltet, bis der Master wieder sein ausgesandtes Datenpaket empfängt.

Bevorzugt werden mit dem Umschalt-Datenpaket auch noch weitere Informationen an die Wechselrichter 2 gesendet. Beispielsweise die Wechselrichter-ID's aller im Wechselrichtersystem 1 befindlichen Wechselrichter 2, wodurch jeder Wechselrichter 2 direkt an jeden anderen Wechselrichter 2 Datenpakete senden kann. Ebenso ist von Vorteil, wenn mit dem Umschalt-Datenpaket jedem Wechselrichter 2 ein Zeitfenster zugeteilt wird, in welchem es ihm erlaubt ist, Datenpakete auf die Datenleitung 7 bzw. auf den Bus zu senden. Zwischen den Zeitfenstern besteht bevorzugterweise eine Zeitspanne, in welcher kein Wechselrichter 2 sendet. Somit sendet immer nur ein Wechselrichter 2 im Wechselrichtersystem 1, wobei dessen gesendete Daten im Wesentlichen sofort von den übrigen Wechselrichtern 2 empfangen werden, bevor es überhaupt dem nächsten Wechselrichter 2 in seinem Zeitfenster erlaubt ist, seine Daten auf den Bus zu senden. Dadurch sind Datenkollisionen ausgeschlossen und ist eine sichere und schnelle Kommunikation gewährleistet.

Durch den Umschaltvorgang befindet sich nun das Wechselrichtersystem 1 in der Bus-Topologie, welche logisch auf dem Ring-System basiert. Daher ist auch im Bus-System die Datenübertragung unidirektional und nicht bidirektional, wie es bei Bus-Systemen aus dem Stand der Technik üblich ist. Beim erfindungsgemäßen Parallelschalten der Wechselrichter 2 hat jedoch die Kombination der Übertragungssicherheit zum Erkennen der Wechselrichter 2 im System mit der hohen Datenübertragungsgeschwindigkeit im laufenden Betrieb eine wesentlich höhere Bedeutung. Des Weiteren sind die Verzögerungszeiten für die Datenübertragung von einem Wechselrichter 2 zum benachbarten Wechselrichter 2, wobei die Daten über alle weiteren Wechselrichter 2 übertragen werden, zu vernachlässigen. Somit kann ohne Weiteres von einer Datenübertragung ohne Zeitverzögerung gesprochen werden.

Wird von einem Wechselrichter 2 ein Datenpaket auf den Bus gesendet, erhalten automatisch alle Wechselrichter 2 im System 1 das Datenpaket, da das Datenpaket von der Empfangsvorrichtung 10 empfangen wird, über die Empfangsleitung 12, den Schalter 18 und die Sendeleitung 11 an die Sendevorrichtung 9 übertragen wird und entsprechend an den nächsten Wechselrichter 2 weitergeleitet wird. Das heißt, es erfolgt keine Auswertung der Daten durch die Steuervorrichtung 6 bevor eine Weiterleitung der Daten durchgeführt wird. Gemäß dem Aufbau der Umschaltvorrichtung 13 wird das empfangene Datenpaket jedoch auch über die Empfangsleitung 15 an die Steuervorrichtung 6 geleitet. Dadurch kann diese das Datenpaket, sozusagen ohne Zeitdruck, auswerten und gegebenenfalls bearbeiten, wenn es für diesen Wechselrichter 2 bestimmt ist.

Damit ein Wechselrichter 2 bzw. dessen Steuervorrichtung 6 auf ein für ihn bestimmtes Datenpaket antworten kann, muss dieser auf das ihm zugeordnete Zeitfenster warten. Zum Senden im Zeitfenster ist es nun erforderlich, die Empfangsleitung 12 durch Öffnen des Schalters 18 von der Sendeleitung 11 zu trennen. Gleichzeitig wird mit diesem Vorgang über die Steuerleitung.16 der Schalter 17 geschlossen, und somit die Sendeleitung 14 mit der Sendeleitung 11 verbunden. Somit kann die Steuervorrichtung 6 ihre Antwort auf den Bus senden. Unmittelbar nach dem Senden werden die Schalter 17, 18 über die Steuerleitung 16 wieder umgeschaltet und die Empfangsleitung 12 wieder mit der Sendeleitung 11 verbunden.

Sollte ein Wechselrichter 2, aus welchem Grund auch immer, einen Fehler verursachen, welcher die Kommunikation zwischen den Wechselrichtern 2 gefährdet, so wird von der Steuervorrichtung 6 ein Reset-Datenpaket auf den Bus gesendet. Dies hat zur Folge, dass alle Wechselrichter 2 im System 1 auf das Ring-System umschalten, sodass ein Neustart des Systems 1 durchgeführt werden kann.

Aus Sicherheitsgründen ist es auch denkbar, dass ein automatischer Schließmechanismus mit einer unabhängigen Stromversorgung im Wechselrichter 2 integriert wird. Das heißt, dass beispielsweise bei einem Stromausfall an einem Wechselrichter 2 die Kommunikation im System 1 nicht unterbrochen wird. Demzufolge wird die Umschaltvorrichtung 13 permanent auf das Bus-System geschaltet, sodass die Datenleitung 7 bestehen bleibt. Beispielsweise kann der automatische Schließmechanismus durch ein retriggerbares Monoflop realisiert werden.

Des Weiteren ist es auch denkbar, dass im Wesentlichen mit der Initialisierung überprüft wird, welcher Wechselrichter 2 bei einem Mehr-Phasennetz, beispielsweise das 3-Phasennetz 4, an welcher Phase angeschlossen ist. Beispielsweise erfolgt dies derart, dass ein Wechselrichter 2 eine Spannung an die Phase anlegt. Alle Wechselrichter 2, die dann die angelegte Spannung erkennen, senden entsprechend ein Datenpaket auf die Datenleitung 7, welches vom Wechselrichter 2 entsprechend empfangen wird, der die Spannung angelegt hat. Dies wird entsprechend für jede Phase durchgeführt, wobei bevorzugt jener Wechselrichter 2 die Spannung an der Phase anlegen darf, der dies als erster ausführt. Dementsprechend kann dann die Information zwischen den Wechselrichtern 2 ausgetauscht werden, welche Wechselrichter 2 an welcher Phase des 3-Phasennetzes 4 angeschlossen ist.

Dies ist insbesondere dann von Bedeutung, wenn die einzelnen Verbindungen der Wechselrichter 2 zu einer Phase des 3-Phasennetzes 4 willkürlich angeschlossen werden oder das Wechselrichtersystem 1 durch zumindest einen Wechselrichter 2 erweitert wird. Somit wissen die Wechselrichter 2, wie viele weitere Wechselrichter 2 ebenfalls an der gleichen Phase angeschlossen sind, was für eine definierte Aufteilung der Last bzw. der Verbraucher 5 sowie für die Synchronisation der Wechselrichter 2 wichtig ist. Somit wird durch ein derartiges System eine völlig automatische Konfiguration des Wechselrichtersystems 1 ermöglicht.

## Patentansprüche

1. Wechselrichtersystem (1) mit mehreren Wechselrichtern (2), welche jeweils zumindest eine Steuervorrichtung (6) aufweisen, wobei zwischen den Wechselrichtern (2) jeweils zumindest eine Leitung (7) zum Austausch von Daten angeordnet ist, **dadurch gekennzeichnet, dass** die Datenleitungen (7) zwischen den Wechselrichtern (2) durch Lichtwellenleiter realisiert sind, dass jeder Wechselrichter (2) eine mit der Steuervorrichtung (6) des Wechselrichters (2) und den Datenleitungen (7) zweier benachbarter Wechselrichter (2) verbundene Kommunikationsvorrichtung (8) mit einer Umschaltvorrichtung (13), einer Sendevorrichtung (9) und einer Empfangsvorrichtung (10) aufweist, wobei die Sendevorrichtung (9) über eine Sendeleitung (11) und die Empfangsvorrichtung (10) über eine Empfangsleitung (12) mit der Umschaltvorrichtung (13) verbunden sind, und die Sendevorrichtung (9) eines Wechselrichters (2) mit der Empfangsvorrichtung (10) des nachfolgenden Wechselrichters (2) und die Empfangsvorrichtung (10) des Wechselrichters (2) mit der Sendevorrichtung (9) des vorhergehenden Wechselrichters (2) verbunden ist, wobei die Umschaltvorrichtung (13) jedes Wechselrichters (2) zum Umschalten der Datenleitungen (7) durch ein von einem als Master definierten Wechselrichter (2) ausgehendes schrittweise unidirektional von einem Wechselrichter (2) zum nachfolgenden Wechselrichter (2) übertragbares Umschalt-Datenpaket zwischen einem während eines Startvorgangs des Wechselrichtersystems (1) verwendeten Ring-System, bei dem alle Wechselrichter (2) über die Datenleitungen (7) in einem Ring zusammengeschaltet sind und die Daten vor der Weiterleitung zum nachfolgenden Wechselrichter (2) von der Steuervorrichtung (6) jedes Wechselrichters (2) ausgewertet werden, und einem logisch auf dem Ring-System basierenden Bus-System nach Abschluss des Startvorgangs während eines laufenden Betriebs des Wechselrichtersystems (1), bei dem alle Wechselrichter (2) mit einem durch die Datenleitungen (7) gebildeten gemeinsamen Bus verbunden sind und die Daten im Wesentlichen gleichzeitig und unmittelbar an alle Wechselrichter (2) gesendet und danach die Daten von den Steuervorrichtungen (6) aller Wechselrichter (2) ausgewertet werden, ausgebildet ist, wobei mit dem Umschalt-Datenpaket jedem Wechselrichter (2) ein Zeitfenster zum Senden von Daten auf die Datenleitung (7) zuweisbar ist, und zum Senden im Zeitfenster die Empfangsleitung (12) von der Sendeleitung (11) getrennt ist.

2. Wechselrichtersystem (1) nach Anspruch 1, **dadurch gekennzeichnet, dass** die Umschaltvorrichtung (13) jedes Wechselrichters (2) mit der zumindest einen Steuervorrichtung (6) über zumindest eine Sendeleitung (14) und eine Empfangsleitung (15) verbunden ist.

3. Wechselrichtersystem (1) nach Anspruch 2, **dadurch gekennzeichnet, dass** die Empfangsleitung (15) der Steuervorrichtung (6) über die Umschaltvorrichtung (13) permanent mit der Empfangsleitung (12) der Empfangsvorrichtung (10) verbunden ist und die Sendeleitung (11) über die Umschaltvorrichtung (13) wahlweise mit der Sendeleitung (14) der Steuervorrichtung (6) oder der Empfangsleitung (12) der Empfangsvorrichtung (10) verbindbar ist.

4. Wechselrichtersystem (1) nach einem der Ansprüche 1 bis 3, **dadurch gekennzeichnet, dass** die Umschaltvorrichtung (13) jedes Wechselrichters (2) zumindest einen Schalter (17) beinhaltet, der über eine Steuerleitung (16) mit der Steuervorrichtung (6) des Wechselrichters (2) verbunden ist.

5. Wechselrichter (2) für ein Wechselrichtersystem (1) nach einem der Ansprüche 1 bis 4, mit zumindest einer Steuervorrichtung (6) und Anschlüssen für Leitungen (7) für die Verbindung mit anderen Wechselrichtern (2) zum Austausch von Daten, **dadurch gekennzeichnet, dass** eine mit der Steuervorrichtung (6) und den Anschlüssen für die durch Lichtwellenleiter realisierte Datenleitungen (7) verbundene Kommunikationsvorrichtung (8) mit einer Umschaltvorrichtung (13), einer Sendevorrichtung (9) und einer Empfangsvorrichtung (10) vorgesehen ist, wobei die Sendevorrichtung (9) über eine Sendeleitung (11) und die Empfangsvorrichtung (10) über eine Empfangsleitung (12) mit der Umschaltvorrichtung (13) verbunden sind, und die Sendevorrichtung (9) mit der Empfangsvorrichtung (10) eines nachfolgenden Wechselrichters (2) und die Empfangsvorrichtung (10) mit der Sendevorrichtung (9) eines vorhergehenden Wechselrichters (2) verbindbar ist, wobei die Umschaltvorrichtung (13) zum Umschalten der Datenleitungen (7) durch ein von einem als Master definierten Wechselrichter (2) ausgehendes schrittweise unidirektional zum nachfolgenden Wechselrichter (2) übertragbares Umschalt-Datenpaket zwischen einem während eines Startvorgangs des Wechselrichtersystems (1) verwendeten Ring-System, bei dem alle Wechselrichter (2) über die Datenleitungen (7) in einem Ring zusammengeschaltet sind und die Daten vor der Weiterleitung zum nachfolgenden Wechselrichter (2) von der Steuervorrichtung (6) jedes Wechselrichters (2) ausgewertet werden, und einem logisch auf dem Ring-System basierenden Bus-System nach Abschluss des Startvorgangs während eines laufenden Betriebs des Wechselrichtersystems (1), bei dem alle Wechselrichter (2) mit einem durch die Datenleitungen (7) gebildeten gemeinsamen Bus verbunden sind und die Daten im Wesentlichen gleichzeitig und unmittelbar an alle Wechselrichter (2) gesendet und danach die Daten von den Steuervorrichtungen (6) aller Wechselrichter (2) ausgewertet werden, ausgebildet ist, wobei mit dem Umschalt-Datenpaket dem Wechselrichter (2) ein Zeitfenster zum Senden von Daten auf die Datenleitung (7) zuweisbar ist, und zum Senden im Zeitfenster die Empfangsleitung (12) von der Sendeleitung (11) getrennt ist.

6. Wechselrichter (2) nach Anspruch 5, **dadurch gekennzeichnet, dass** die Umschaltvorrichtung (13) mit der zumindest einen Steuervorrichtung (6) über zumindest eine Sendeleitung (14) und eine Empfangsleitung (15) verbunden ist.

7. Wechselrichter (2) nach Anspruch 6, **dadurch gekennzeichnet, dass** die Empfangsleitung (15) der Steuervorrichtung (6) über die Umschaltvorrichtung (13) permanent mit der Empfangsleitung (12) der Empfangsvorrichtung (10) verbunden ist, und die Sendeleitung (11) über die Umschaltvorrichtung (13) wahlweise mit der Sendeleitung (14) der Steuervorrichtung (6) oder der Empfangsleitung (12) der Empfangsvorrichtung (10) verbindbar ist.

8. Wechselrichter (2) nach einem der Ansprüche 5 bis 7, **dadurch gekennzeichnet, dass** die Umschaltvorrichtung (13) zumindest einen Schalter (17) beinhaltet, der über eine Steuerleitung (16) mit der Steuervorrichtung (6) verbunden ist.

9. Verfahren zum Betreiben mehrerer Wechselrichter (2) mit jeweils einer Steuervorrichtung (6) eines Wechselrichtersystems (1), wobei zwischen den Wechselrichtern (2) Daten über zumindest eine Leitung (7) ausgetauscht werden, **dadurch gekennzeichnet, dass** die durch Lichtwellenleiter realisierte Datenleitungen (7) mit jeweils einer Sendevorrichtung (9) und jeweils einer Empfangsvorrichtung (10) einer Kommunikationsvorrichtung (8) jedes Wechselrichters (2) verbunden werden, dass die Sendevorrichtung (9) eines Wechselrichters (2) mit der Empfangsvorrichtung (10) des nachfolgenden Wechselrichters (2) und die Empfangsvorrichtung (10) des Wechselrichters (2) mit der Sendevorrichtung (9) des vorhergehenden Wechselrichters (2) verbunden wird, dass die Sendevorrichtung (9) jedes Wechselrichters (2) über eine Sendeleitung (11) und die Empfangsvorrichtung (10) jedes Wechselrichters (2) über eine Empfangsleitung (12) mit einer Umschaltvorrichtung (13) verbunden werden, während eines Startvorgangs des Wechselrichtersystems (1) die Wechselrichter (2) über die Umschaltvorrichtung (13) zu einem physikalischen und logischen Ring-System verbunden werden, bei dem alle Wechselrichter (2) über die Datenleitungen (7) in einem Ring zusammengeschaltet sind und die Daten vor der Weiterleitung zum nächsten Wechselrichter (2) von der Steuervorrichtung (6) jedes Wechselrichters (2) ausgewertet werden, und dass nach dem Startvorgang während eines laufenden Betriebs die Verbindung der Wechselrichter (2) durch ein von einem als Master definierten Wechselrichter (2) ausgehendes schrittweise unidirektional von einem Wechselrichter (2) zum nachfolgenden Wechselrichter (2) übertragbares Umschalt-Datenpaket auf ein logisch auf dem Ring-System basierendes Bus-System, bei dem alle Wechselrichter (2) mit einem durch die Datenleitungen (7) gebildeten gemeinsamen Bus verbunden sind und die Daten im Wesentlichen gleichzeitig und unmittelbar an alle Wechselrichter (2) gesendet und danach die Daten von den Steuervorrichtungen (6) aller Wechselrichter (2) ausgewertet werden, umgeschaltet wird, wobei mit dem Umschalt-Datenpaket jedem Wechselrichter (2) ein Zeitfenster zum Senden von Daten auf die Datenleitung (7) zugewiesen wird, und zum Senden im Zeitfenster die Empfangsleitung (12) von der Sendeleitung (11) getrennt wird.

10. Verfahren nach Anspruch 9, **dadurch gekennzeichnet, dass** während des Startvorgangs ein Wechselrichter (2) als Master definiert wird, und von dem als Master definierten Wechselrichter (2) eine Initialisierung der Wechselrichter (2) im Wechselrichtersystem (1) durchgeführt wird.

11. Verfahren nach Anspruch 10, **dadurch gekennzeichnet, dass** von dem als Master definierten Wechselrichter (2) ein Datenpaket an den damit verbundenen Wechselrichter (2) gesendet wird, und das Datenpaket durch ein Initialisierungspaket ergänzt wird, bevor es an den folgenden Wechselrichter (2) übertragen wird.

12. Verfahren nach Anspruch 10 und 11, **dadurch gekennzeichnet, dass** das Datenpaket solange von einem Wechselrichter (2) zum nächsten im Ring-System befindlichen Wechselrichter (2) weitergeleitet wird, bis das Datenpaket wieder von dem als Master definierten Wechselrichter (2) empfangen wird.

13. Verfahren nach einem der Ansprüche 10 bis 12, **dadurch gekennzeichnet, dass** während des Startvorgangs überprüft wird, welcher Wechselrichter (2) an welcher Phase eines Mehr-Phasennetzes (4) angeschlossen ist, und dass die Wechselrichter (2) in Abhängigkeit dieser Überprüfung entsprechend synchronisiert werden.

## Claims

1. An inverter system (1) with several inverters (2), each of which having at least one control unit (6), with at least one line (7) each being provided between the inverters (2) for data exchange, **characterized in that** the data lines (7) between the inverters (2) are formed by optical waveguides, that each inverter (2) has a communication device (8) which is connected to the control unit (6) of the inverter (2) and to the data lines (7) of two neighboring inverters (2) and which has a switching device (13), a transmitter (9) and a receiver (10), the transmitter (9) being connected to the switching device (13) via a transmission line (11) and the receiver (10) being connected to the switching device (13) via a receiving line (12), and the transmitter (9) of an inverter (2) being connected to the receiver (10) of the downstream inverter (2) and the receiver (10) of the inverter (2) being connected to the transmitter (9) of the upstream inverter (2), wherein the switching device (13) of each inverter (2) is configured to switch the data lines (7), by using a data packet for switching coming from an inverter (2) defined as the master and being transmittable in a step-wise unidirectional fashion from an inverter (2) to the downstream inverter (2), between a ring system, which is used during a starting procedure of the inverter system (1) and in which all inverters (2) are interconnected in a ring via the data lines (7) and the data is evaluated by the control units (6) of each inverter (2) before forwarding them to the downstream inverter (2), and between a bus system, which is logically based on the ring system, after the starting procedure has been finished, during running operation of the inverter system (1), in which bus system all inverters (2) are connected to a common bus formed by the data lines (7) and the data is sent to all inverters (2) substantially simultaneously and immediately and then the data is evaluated by the control units (6) of each inverter (2), wherein along with the data packet for switching, a time frame for sending data may be allocated to the data line (7) of each inverter (2), and the receiving line (12) is disconnected from the transmission line (11) for sending within the time frame.

2. The inverter system (1) according to claim 1, **characterized in that** the switching device (13) of each inverter (2) is connected to the at least one control unit (6) via at least one transmission line (14) and one receiving line (15).

3. The inverter system (1) according to claim 2, **characterized in that** the receiving line (15) of the control unit (6) is permanently connected to the receiving line (12) of the receiver (10) via the switching device (13) and that, via the switching device (13), the transmission line (11) can be connected optionally to the transmission line (14) of the control unit (6) or to the receiving line (12) of the receiver (10).

4. The inverter system (1) according to any one of claims 1 to 3, **characterized in that** the switching device (13) of each inverter (2) includes at least one switch (17) which is connected to the control unit (6) of the inverter (2) via a control line (16).

5. An inverter (2) for an inverter system (1) according to any one of claims 1 to 4, with at least one control unit (6) and connections for lines (7) for connections to other inverters (2) for data exchange, **characterized in that** a communication device (8) is provided, which is connected to the control unit (6) and the connections for the data lines (7) formed by optical waveguides and which has a switching device (13), a transmitter (9) and a receiver (10), the transmitter (9) being connected to the switching device (13) via a transmission line (11) and the receiver (10) being connected to the switching device (13) via a receiving line (12), and the transmitter (9) being connectible to the receiver (10) of a downstream inverter (2) and the receiver (10) being connectible to the transmitter (9) of an upstream inverter (2), wherein the switching device (13) is configured to switch the data lines (7), by using a data packet for switching coming from an inverter (2) defined as the master and being transmittable in a step-wise unidirectional fashion to the downstream inverter (2), between a ring system, which is used during a starting procedure of the inverter system (1) and in which all inverters (2) are interconnected in a ring via the data lines (7) and the data is evaluated by the control units (6) of each inverter (2) before forwarding them to the downstream inverter (2), and between a bus system, which is logically based on the ring system, after the starting procedure has been finished, during running operation of the inverter system (1), in which bus system all inverters (2) are connected to a common bus formed by the data lines (7) and the data is sent to all inverters (2) substantially simultaneously and immediately and then the data is evaluated by the control units (6) of each inverter (2), wherein along with the data packet for switching, a time frame for sending data may be allocated to the data line (7) of each inverter (2), and the receiving line (12) is disconnected from the transmission line (11) for sending within the time frame.

6. The inverter (2) according to claim 5, **characterized in that** the switching device (13) is connected to the at least one control unit (6) via at least one transmission line (14) and one receiving line (15).

7. The inverter (2) according to claim 6, **characterized in that** the receiving line (15) of the control unit (6) is permanently connected to the receiving line (12) of the receiver (10) via the switching device (13), and that, via the switching device (13), the transmission line (11) can be connected optionally to the transmission line (14) of the control unit (6) or to the receiving line (12) of the receiver (10).

8. The inverter (2) according to any one of claims 5 to 7, **characterized in that** the switching device (13) includes at least one switch (17) which is connected to the control unit (6) via a control line (16).

9. A method of operating several inverters (2), each with one control unit (6), of an inverter system (1), with data being exchanged between the inverters (2) via at least one line (7), **characterized in that** the data lines (7) formed by optical waveguides are each connected to a transmitter (9) and a receiver (10) of a communication device (8) of each inverter (2), that the transmitter (9) of an inverter (2) is connected to the receiver (10) of the downstream inverter (2) and the receiver (10) of the inverter (2) is connected to the transmitter (9) of the upstream inverter (2), that the transmitter (9) of each inverter (2) is connected to a switching device (13) via a transmission line (11) and the receiver (10) of each inverter (2) is connected to a switching device (13) via a receiving line (12), that during a starting procedure of the inverter system (1), the inverters (2) are interconnected to form a physical and logical ring system via the switching device (13), in which ring system all inverters (2) are interconnected in a ring via the data lines (7), and that after the starting procedure has been finished, during running operation, the connection of the inverters (2) is switched, by using a data packet for switching coming from an inverter (2) defined as the master and being transmittable in a step-wise unidirectional fashion from an inverter (2) to the downstream inverter (2), to a bus system, which is logically based on the ring system and in which all inverters (2) are connected to a common bus formed by the data lines (7) and the data is sent to all inverters (2) substantially simultaneously and immediately and then the data is evaluated by the control units (6) of each inverter (2), wherein along with the data packet for switching, a time frame for sending data is allocated to the data line (7) of each inverter (2), and the receiving line (12) is disconnected from the transmission line (11) for sending within the time frame.

10. The method according to claim 9, **characterized in that** an inverter (2) is defined as the master during the starting procedure and that the inverter (2) defined as the master conducts an initialization of the inverters (2) in the inverter system (1).

11. The method according to claim 10, **characterized in that** the inverter (2) defined as the master sends a data packet to the inverter (2) connected thereto and that the data packet is supplemented by an initialization packet before being transmitted to the downstream inverter (2).

12. The method according to claims 10 and 11, **characterized in that** an inverter (2) forwards the data packet to the inverter (2) which is next in the ring system until the data packet is again received by the inverter (2) defined as the master.

13. The method according to any one of claims 10 to 12, **characterized in that** during the starting procedure a check is performed about which inverter (2) is connected to which phase of a multiple-phase network (4) and **in that** the inverters (2) are synchronized appropriately based on this check.

## Revendications

1. Système d'onduleurs (1) comprenant plusieurs onduleurs (2), qui comprennent chacun au moins un dispositif de commande (6), au moins une ligne (7) étant agencée à chaque fois entre les onduleurs (2) pour l'échange de données, **caractérisé en ce que** les lignes de données (7) entre les onduleurs (2) sont réalisées par des conducteurs de lumière, **en ce que** chaque onduleur (2) comprend un dispositif de communication (8) raccordé avec le dispositif de commande (6) de l'onduleur (2) et les lignes de données (7) de deux onduleurs voisins (2), comprenant un dispositif de commutation (13), un dispositif d'envoi (9) et un dispositif de réception (10), le dispositif d'envoi (9) étant raccordé par une ligne d'envoi (11) et le dispositif de réception (10) par une ligne de réception (12) avec le dispositif de commutation (13), et le dispositif d'envoi (9) d'un onduleur (2) étant raccordé avec le dispositif de réception (10) de l'onduleur (2) suivant et le dispositif de réception (10) de l'onduleur (2) avec le dispositif d'envoi (9) de l'onduleur (2) précédent, le dispositif de commutation (13) de chaque onduleur (2) étant configuré pour la commutation des lignes de données (7) par un paquet de données de commutation provenant d'un onduleur (2) défini comme maître, transférable graduellement et unidirectionnellement d'un onduleur (2) vers l'onduleur (2) suivant, entre un système de circuit utilisé pendant le processus de démarrage du système d'onduleurs (1), selon lequel tous les onduleurs (2) sont raccordés ensemble par les lignes de données (7) en un circuit et les données sont évaluées par le dispositif de commande (6) de chaque onduleur (2) avant le transfert vers l'onduleur (2) suivant, et un système de bus fondé de manière logique sur le système de circuit après la fin du processus de démarrage pendant une exploitation en cours du système d'onduleurs (1), selon lequel tous les onduleurs (2) sont reliés par un bus commun formé par les lignes de données (7) et les données sont envoyées essentiellement simultanément et directement à tous les onduleurs (2), puis les données sont évaluées par les dispositifs de commande (6) de tous les onduleurs (2), une fenêtre de temps pour l'envoi de données dans la ligne de données (7) pouvant être attribuée au paquet de données de commutation de chaque onduleur, et la ligne de réception (12) étant séparée de la ligne d'envoi (11) pour l'envoi dans la fenêtre de temps.

2. Système d'onduleurs (1) selon la revendication 1, **caractérisé en ce que** le dispositif de commutation (13) de chaque onduleur (2) est raccordé avec ledit au moins un dispositif de commande (6) par au moins une ligne d'envoi (14) et une ligne de réception (15).

3. Système d'onduleurs (1) selon la revendication 2, **caractérisé en ce que** la ligne de réception (15) du dispositif de commande (6) est raccordée en permanence par le biais du dispositif de commutation (13) avec la ligne de réception (12) du dispositif de réception (10), et la ligne d'envoi (11) peut être raccordée par le biais du dispositif de commutation (13) au choix avec la ligne d'envoi (14) du dispositif de commande (6) ou la ligne de réception (12) du dispositif de réception (10).

4. Système d'onduleurs (1) selon l'une quelconque des revendications 1 à 3, **caractérisé en ce que** le dispositif de commutation (13) de chaque onduleur (2) contient au moins un commutateur (17) qui est raccordé par une ligne de commande (16) avec le dispositif de commande (6) de l'onduleur (2).

5. Onduleur (2) pour un système d'onduleurs (1) selon l'une quelconque des revendications 1 à 4, qui comprend au moins un dispositif de commande (6) et des raccords pour des lignes (7) pour le raccordement avec d'autres onduleurs (2) pour l'échange de données, **caractérisé en ce qu'**un dispositif de communication (8) raccordé avec le dispositif de commande (6) et les raccords pour les lignes de données (7) réalisées par des conducteurs de lumière est muni d'un dispositif de commutation (13), d'un dispositif d'envoi (9) et d'un dispositif de réception (10), le dispositif d'envoi (9) étant raccordé par une ligne d'envoi (11) et le dispositif de réception (10) par une ligne de réception (12) avec le dispositif de commutation (13), et le dispositif d'envoi (9) pouvant être raccordé avec le dispositif de réception (10) d'un onduleur suivant (2) et le dispositif de réception (10) avec le dispositif d'envoi (9) d'un onduleur précédent (2), le dispositif de commutation (13) étant configuré pour la commutation des lignes de données (7) par un paquet de données de commutation provenant d'un onduleur (2) défini comme maître, transférable graduellement et unidirectionnellement vers l'onduleur (2) suivant, entre un système de circuit utilisé pendant le processus de démarrage du système d'onduleurs (1), selon lequel tous les onduleurs (2) sont raccordés ensemble par les lignes de données (7) en un circuit et les données sont évaluées par le dispositif de commande (6) de chaque onduleur (2) avant le transfert vers l'onduleur (2) suivant, et un système de bus fondé de manière logique sur le système de circuit après la fin du processus de démarrage pendant une exploitation en cours du système d'onduleurs (1), selon lequel tous les onduleurs (2) sont reliés par un bus commun formé par les lignes de données (7) et les données sont envoyées essentiellement simultanément et directement à tous les onduleurs (2), puis les données sont évaluées par les dispositifs de commande (6) de tous les onduleurs (2), une fenêtre de temps pour l'envoi de données dans la ligne de données (7) pouvant être attribuée au paquet de données de commutation de l'onduleur (2) , et la ligne de réception (12) étant séparée de la ligne d'envoi (11) pour l'envoi dans la fenêtre de temps.

6. Onduleur (2) selon la revendication 5, **caractérisé en ce que** le dispositif de commutation (13) est raccordé avec ledit au moins un dispositif de commande (6) par au moins une ligne d'envoi (14) et une ligne de réception (15).

7. Onduleur (2) selon la revendication 6, **caractérisé en ce que** la ligne de réception (15) du dispositif de commande (6) est raccordée en permanence par le biais du dispositif de commutation (13) avec la ligne de réception (12) du dispositif de réception (10), et la ligne d'envoi (11) peut être raccordée par le biais du dispositif de commutation (13) au choix avec la ligne d'envoi (14) du dispositif de commande (6) ou la ligne de réception (12) du dispositif de réception (10).

8. Onduleur (2) selon l'une quelconque des revendications 5 à 7, **caractérisé en ce que** le dispositif de commutation (13) contient au moins un commutateur (17) qui est raccordé par une ligne de commande (16) avec le dispositif de commande (6).

9. Procédé d'exploitation de plusieurs onduleurs (2) comprenant à chaque fois un dispositif de commande (6) d'un système d'onduleurs (1), des données étant échangées entre les onduleurs (2) par au moins une ligne (7), **caractérisé en ce que** les lignes de données (7) réalisées par des conducteurs de lumière sont raccordées avec à chaque fois un dispositif d'envoi (9) et à chaque fois un dispositif de réception (10) d'un dispositif de communication (8) de chaque onduleur (2), **en ce que** le dispositif d'envoi (9) d'un onduleur (2) est raccordé avec le dispositif de réception (10) de l'onduleur suivant (2) et le dispositif de réception (10) de l'onduleur (2) avec le dispositif d'envoi (9) de l'onduleur précédent (2), **en ce que** le dispositif d'envoi (9) de chaque onduleur (2) est raccordé par une ligne d'envoi (11) et le dispositif de réception (10) de chaque onduleur (2) par une ligne de réception (12) avec un dispositif de commutation (13), pendant un processus de démarrage du système d'onduleurs (1), les onduleurs (2) sont reliés par le dispositif de commutation (13) en un système de circuit physique et logique, selon lequel tous les onduleurs (2) sont raccordés ensemble par les lignes de données (7) en un circuit et les données sont évaluées par le dispositif de commande (6) de chaque onduleur (2) avant le transfert vers l'onduleur (2) suivant, et **en ce qu'**après le processus de démarrage, pendant une exploitation en cours, le raccordement des onduleurs (2) est commuté par un paquet de données de commutation provenant d'un onduleur (2) défini comme maître, transférable graduellement et unidirectionnellement d'un onduleur (2) vers l'onduleur (2) suivant par un système de bus fondé de manière logique sur le système de circuit, selon lequel tous les onduleurs (2) sont reliés par un bus commun formé par les lignes de données (7) et les données sont envoyées essentiellement simultanément et directement à tous les onduleurs (2), puis les données sont évaluées par les dispositifs de commande (6) de tous les onduleurs (2), une fenêtre de temps pour l'envoi de données dans la ligne de données (7) pouvant être attribuée au paquet de données de commutation de chaque onduleur, et la ligne de réception (12) étant séparée de la ligne d'envoi (11) pour l'envoi dans la fenêtre de temps.

10. Procédé selon la revendication 9, **caractérisé en ce que**, pendant le processus de démarrage, un onduleur (2) est défini comme maître, et une initialisation de l'onduleur (2) le système d'onduleurs (1) est réalisée à partir de l'onduleur (2) défini comme maître.

11. Procédé selon la revendication 10, **caractérisé en ce qu'**un paquet de données est envoyé à partir de l'onduleur (2) défini comme maître vers l'onduleur (2) raccordé à celui-ci, et le paquet de données est complété par un paquet d'initialisation avant d'être transféré vers l'onduleur (2) suivant.

12. Procédé selon la revendication 10 ou 11, **caractérisé en ce que** le paquet de données est transféré d'un onduleur (2) vers l'onduleur (2) suivant dans le système de circuit jusqu'à ce que le paquet de données soit de nouveau reçu par l'onduleur (2) défini comme maître.

13. Procédé selon l'une quelconque des revendications 10 à 12, **caractérisé en ce que**, pendant le processus de démarrage, on vérifie quel onduleur (2) est raccordé à quelle phase d'un réseau polyphasé (4), et **en ce que** les onduleurs (2) sont synchronisés selon cette vérification.
